# EUROPEAN PATENT SPECIFICATION

(11) **EP 4 273 886 B1**
(45) Date of publication and mention of the grant of the patent: **12.03.2025**
(21) Application number: 21939785.8
(22) Date of filing: 21.12.2021
(51) Int. Cl.: G21C 15/18, G21D 1/02, G21D 3/06

(54) **PASSIVE SPECIAL SAFETY SYSTEM AND WATER SUPPLY SYSTEM FOR NUCLEAR POWER PLANT**
PASSIVES SICHERHEITSSYSTEM MIT BESONDERER SICHERHEIT UND WASSERVERSORGUNGSSYSTEM FÜR EIN KERNKRAFTWERK
SYSTÈME DE SÉCURITÉ SPÉCIAL PASSIF ET SYSTÈME D'ALIMENTATION EN EAU POUR CENTRALE NUCLÉAIRE

(30) Priority: 07.05.2021 CN 202110496633
(43) Date of publication of application: 08.11.2023
(73) Proprietor: Suzhou Nuclear Power Research Institute Co., Ltd, Suzhou, Jiangsu 215008 (CN); Daya Bay Nuclear Power Operations and Management Co., Ltd., Shenzhen, Guangdong 518124 (CN); China General Nuclear Power Corporation, Shenzhen, Guangdong 518028 (CN); CGN Power Co., Ltd., Shenzen, Guangdong 518028 (CN)
(72) Inventor: WU, Zhenhua, Suzhou, Jiangsu 215008 (CN); WU, Guangjun, Suzhou, Jiangsu 215008 (CN); TANG, Qi, Suzhou, Jiangsu 215008 (CN); XU, Junjun, Suzhou, Jiangsu 215008 (CN); LIU, Jie, Suzhou, Jiangsu 215008 (CN); KONG, Fanrun, Suzhou, Jiangsu 215008 (CN)
(74) Representative: Westphal, Mussgnug & Partner, Patentanwälte mbB
(86) International application number: PCT/CN2021/139860
(87) International publication number: WO 2022/233141

(56) References cited:
- CN-A- 110 534 214
- CN-A- 111 128 414
- CN-A- 112 289 472
- CN-A- 113 380 433
- JP-A- 2009 210 283
- US-A- 4 473 528
- US-A1- 2015 117 586
- US-A1- 2015 243 384
- US-B2- 9 583 224

## Description

### BACKGROUND OF THE INVENTION

### 1.Technical Field

The invention relates to the field of nuclear power, in particular to a passive special safety system and a water supply system for a nuclear power plant.

### 2. Description of Related Art

The main function of the special safety system is to mitigate the consequences of accidents. For example, in case of primary circuit water loss, secondary circuit steam/feed water pipeline rupture, steam generator heat transfer tube rupture, power loss and low pressure reactor melting, the corresponding special safety system is activated to limit and mitigate the consequences of the accident and ensure the nuclear safety function:
1) Reactivity control; that chain fission reaction can be terminate;
2) Core residual heat removal: regardless of the state of the reactor, the core heat can be removed;
3) Containment of radioactive products: radiation and protection of radioactive sources.

The third generation nuclear power unit represented by AP1000 usually adopts the structure of steel containment and containment top water tank, as well as the secondary-side passive cooling system. Through the steel wall containment or heat exchanger, the passive cooling of the containment atmosphere and the secondary loop can be realized. However, it is difficult to apply the design to the second generation nuclear power units, and the transformation is difficult and the cost is high.

The containment cooling system is provided in the AP1000, and its main function is to remove the containment heat and reduce the containment pressure and temperature under the design basis accidents that lead to the increase of containment pressure and temperature.

The new containment high-level water tank (containing about 3000 tons of water) and the passive Containment Heat Removal System (EHR) immersed in the water tank, the secondary-side Passive Residual Heat Removal System (PRS), the reactor cavity water injection cooling system and other passive safety systems are added to HPR10001 of CGN. These systems transfer energy from the steam generator 50 or containment atmosphere to the high-level water tank through closed circuit pipelines. However, a large number of pipelines in these systems are located at the high elevation of the containment, and the mechanical analysis, pipeline anti-swing and embedded parts design are complex, which brings a lot of trouble to the construction and equipment installation.

The HPR1000 of CGN is also newly added with a high-level containment water tank (containing 3,100 tons of water) and a secondary-side Passive Residual Heat Removal System (PRS) immersed in the water tank. And without any passive containment heat removal system. The functionality of this section is realized by two pumps and heat exchangers of the containment heat removal system (EHR). In the pit water injection function, the active water injection is realized by the EHR system water pump, and the passive water injection is realized by the pit water injection tank in the containment.

In the related art, such as a Passive special safety system for Nuclear Power Plants (Application No. is CN 201110037783.7. ) The invention discloses a special passive safety system for a nuclear power plant, which comprises a secondary-side passive residual heat removal heat exchanger, a steam condensate tank, a passive reactor cavity water injection system, a passive high-pressure reactor core water replenishing tank and related valves and pipelines. When a design basis accident or an accident exceeding the design basis occurs in the nuclear power station, a series of passive and active safety facilities are put into operation step by step to effectively cool the primary loop and the reactor core of the reactor in time and rapidly, so that the nuclear power station can smoothly enter a safe cold shutdown state, the serious accident consequences of the reactor are inhibited or relieved, the accident hazard are reduced, and the safety of the nuclear power station is improved. A Passive Engineered Safety Device for a Nuclear Power Plant (Application No. is CN 201610297360.1.) This invention provides a passive engineered safety device for a nuclear power plant, comprising: discharge pipelines; a heat exchanger; a diffuser; a quick relief valve; and an injection manifold. The passive special safety facility for the nuclear power station provided by the invention is different from the traditional special safety facility for the nuclear power station, the connecting pipelines of the passive special safety facility are intensively arranged on the pressure vessel, and the passive special safety facility is used for directly cooling and injecting water into the reactor core, so that the natural circulation capacity is increased, and a safety protection system is safer and more reliable.

Although the related technologies listed above can effectively cool the primary loop and core of the reactor in a timely and rapid manner, enable the nuclear power plant to enter a safe cold shutdown state smoothly, inhibit or mitigate the consequences of serious reactor accidents, reduce accident hazard and improve the safety of the nuclear power plant. But in case of failure of the passive containment cooling system, the secondary-side cooling system, the safety injection system and/or the containment spraying system, the effective cooling of the reactor primary circuit and core cannot be continued.

Patent publication US 4 473528 A discloses a passive safety system of a nuclear power plant, comprising a water supply system connected to the cold leg of the reactor core; said water supply system comprising a water tank pressurized by steam, a steam pipeline, a make-up water pipeline, and a drain pipeline; the steam pipeline is connected with the water tank and with a steam generator, so that, when in use, the steam provided by said steam generator pressurizes the water tank; the make-up water pipeline is connected with the water tank and with an external water source; the drain pipeline is connected with the water tank and with the cold leg of the reactor core.
Patent publication US 2015/243384 A1 discloses a water supply tank design for a passive safety system of a nuclear reactor, wherein a plurality of partition plates are provided in the tank body and partition a space in the tank body into a plurality of water chambers.

### BRIEF SUMMARY OF THE INVENTION

The technical problem to be solved by the present invention is to provide an improved passive special safety system and a water supply system for a nuclear power plant. The problem underlying the present application is solved by a water supply system for passive special safety system of a nuclear power plant having the features of claim 1, as well as by a passive special safety system for a nuclear power plant having the features of claim 8.

A water supply system according to the invention is defined in claim 1. Further embodiments are defined in the dependent claims.

### BRIEF DESCRIPTION OF THE SEVERAL VIEWS OF THE DRAWINGS

Brief description of that drawing the invention will now be further described by way of example with reference to the accompany drawings in which:

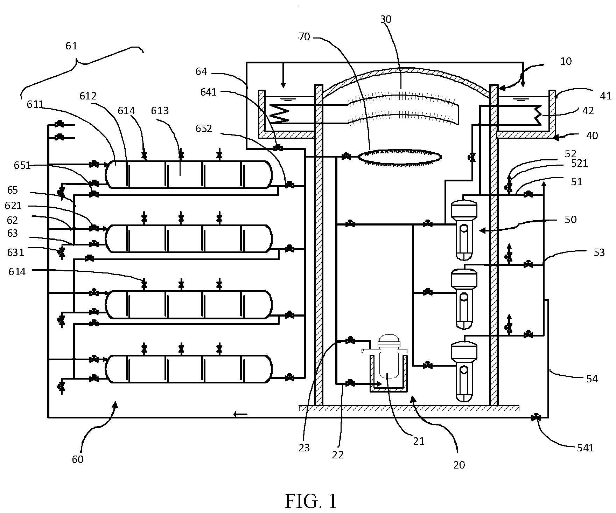

Fig. 1 is a schematic block diagram of a passive special safety system for a nuclear power plant in accordance to an embodiment of the present invention.

### DETAILED DESCRIPTION OF THE INVENTION

For a clearer understanding of the technical features, objects, and effects of the present invention, specific embodiments of the present invention will now be described in detail with reference to the accompanying drawings.

Fig. 1 illustrates a preferred embodiment of a passive special safety system for a nuclear power plant of the present invention. After the accident of the reactor, when the active special safety system fails, the passive special safety system of the nuclear power plant is used as the standby passive special safety system to establish the core cooling capacity, ensure the radioactive containment, limit and mitigate the consequences of the accident, and ensure the nuclear safety. At the same time, it can replace the high-level water tank of the containment of the third-generation nuclear power unit, reduce the load of the containment and improve the safety of the containment.

As shown in fig. 1, in some embodiments, the passive special safety system of the nuclear power plant may include a containment 10, a reactor core assembly 20, a passive containment cooling system 30, a secondary-side passive cooling system 40, a steam generator 50, a spraying system 70, and a water supply system 60. The containment 10 may be used to house a reactor core assembly 20, a passive containment cooling system 30, and a steam generator 50. The reactor core assembly 20 may be disposed in the containment 10 and may be connected to the steam generator 50. The passive containment cooling system 30 may be disposed in the upper space of the containment 10 and opposite to the reactor core assembly 20 for cooling the reactor core assembly 20. The secondary-side passive cooling system 40 may be disposed at an upper portion of the containment 10, and may be connected to the steam generator 50 and the passive containment cooling system 30. In some embodiments, the secondary-side passive cooling system 40 can be divided into two groups, wherein one group can be connected with the steam generator 50, and the other group can be connected with the passive containment cooling system 30. In some embodiments, the steam generator 50 may be coupled to the reactor core assembly 20 and the steam generator 50. In some embodiments, the spraying system 70 may be disposed in the upper space of the containment 10, may be disposed opposite to the reactor core assembly 20, and may cool the reactor core assembly 20 by spraying. In some embodiments, the water supply system may be connected to and supply water to the passive containment cooling system 30, the secondary-side passive cooling system 40, the spraying system 70, and the reactor core assembly 20. Of course, it is understood that, in other embodiments, it may only be connected to the passive containment cooling system 30, the secondary-side passive cooling system 40, the spraying system 70, or the reactor core assembly 20.

Further, in some embodiments, a reactor core assembly 20 may be disposed at a lower portion of the containment 10, and may include a pressure vessel 21, which may be a nuclear fuel reaction vessel. The pressure vessel 21 may be placed in the reactor pit and the coolant inlet of the pressure vessel 21 may be connected to a low pressure safety injection system 23 and the reactor pit may be connected to a reactor pit water injection system 22. The coolant outlet of the pressure vessel 21 may be connected to a steam generator 50.

Further, in some embodiments, the passive containment cooling system 30 may include a helical coiled tube disposed in the dome region of the containment 10 and may be coupled to the secondary-side passive cooling system 40, specifically, in some embodiments, the helical coiled tube may be connected to the heat exchanger 42 of the secondary-side passive cooling system 40.

Further, in some embodiments, the secondary-side passive cooling system 40 may include a water tank 41 and a heat exchanger 42 disposed in the water tank 41. The water tank 41 may be connected to the water supply system 60, and the water supply system 60 may supply water to the water tank 41. The heat exchanger 42 may be disposed in the water tank 41 to exchange heat with the water in the water tank 41. In some embodiments, one set of the heat exchangers 42 of the secondary-side passive cooling system 40 may have an outlet connected to an inlet of the passive containment cooling system 30, an inlet connected to an outlet of the passive containment cooling system 30, a cooled body of water delivered to the passive containment cooling system, the other group of the heat exchanger 42 of the secondary-side passive cooling system 40 receives the high-temperature water formed after the passive containment cooling system 30 cools the containment 10, the inlet end of the heat exchanger 42 can be connected with the steam outlet of the steam generator 50, and the outlet end of the heat exchanger 42 can be connected with the water supply system 60 to cool the steam output by the steam generator 50. And convey that cooled water to the water supply system 60 for recycling.

Further, in some embodiments, the number of the steam generators 50 may be three. Of course, it is understood that in other embodiments, the number of the steam generators 50 may not be limited to three. The steam outlet pipelines 51 of the three steam generators 50 may be connected to each other. Each steam generator 50 may include a housing and a heat exchange tube provided in the housing. The inlet end of the housing may be connected to the water supply 60, which may deliver water to the inlet end of the housing. The steam outlet end of the housing may be connected to a steam outlet pipeline 51, and the steam outlet pipeline 51 may be connected to a steam output pipeline 53 to deliver steam to the steam turbine to drive the steam turbine to work. In some embodiments, the steam outlet pipeline 51 may be provided with a pressure discharge pipeline 52, and the pressure discharge pipeline 52 may be provided with an atmosphere discharge valve 521. The atmosphere discharge valve 521 is opened to discharge pressure to the steam outlet pipeline 51 in time. The steam output pipeline 53 can be connected to one end of the steam-pressurizing main pipeline 54, and the other end of the steam-pressurizing main pipeline 54 can be connected to the water supply system 60, so as to transmit the steam to the water supply system 60 to pressurize the water supply system 60, so that the water supply system 60 outputs the water. In some embodiments, the steam-pressurizing main pipeline 54 may be provided with a main steam isolation valve 541 that opens to deliver steam to the water supply 60.

Further, in some embodiments, the spraying system 70 may be disposed below the passive containment cooling system 30, may be located above the reactor core assembly 20, and may spray the reactor core assembly 20 to cool the reactor core assembly 20. In some embodiments, the spraying system 70 may be connected to the water supply 60 and may be supplied with water from the water supply 60.

According to the invention the water supply system 60 includes at least one steam-pressurizing water tank 61, at least one steam-pressurizing pipeline 62, at least one water replenishment pipeline 63, and a drain pipeline 64. The steam-pressurizing water tank 61 is connected to the steam generated by the steam generator 50, and is pressurized by the steam to drive the water in the steam-pressurizing water tank 61 to be delivered out. The steam-pressurizing pipeline 62 is connected to the steam-pressurizing water tank 61 and the steam generator 50, specifically, in some embodiments, each steam-pressurizing pipeline 62 may be connected to the steam-pressurizing main pipeline 54 and a pressurized steam inlet of the steam-pressurizing water tank 61. A water replenishment pipeline 63 is connected to a steam-pressurizing water tank 61 and an external water source to supply water to the steam-pressurizing water tank 61 in time. According to the invention, the drain pipeline 64 is connected to all the steam-pressurizing water tanks 61, and may be connected to the passive containment cooling system 30, the secondary-side passive cooling system 40, the spraying system 70, and the reactor core assembly 20. Of course, it is understood that in other embodiments, the drain pipelines 64 may be connected only to the passive containment cooling system 30, the secondary-side passive cooling system 40, the spraying system 70, or the reactor core assembly 20.

Further, according to the invention, a steam-pressurizing water tank 61 includes a tank body 611 and a plurality of partition plates 612. The tank body 611 is a horizontal tank, and the plurality of partition plates 612 is disposed in the tank body 611 at intervals along the length direction of the tank body 611, and form a predetermined included angle with the bottom wall of the tank body 611, so as to guide water and divide the space in the tank body 611 into a plurality of water chambers 613. Specifically, in some embodiments, the tank body 611 may include a bottom wall and a top wall disposed opposite the bottom wall. A plurality of partition plates 612 are disposed on the bottom wall, and a plurality of partition plates 612 are disposed on the top wall. The plurality of partition plates 612 on the bottom wall can extend toward the top wall and be perpendicular to the bottom wall to form a vertical flow guide design, and the plurality of partition plates 612 on the top wall can extend toward the bottom wall and be perpendicular to the top wall to form a vertical flow guide design. The height of the partition plates 612 may be smaller than the height of the tank body 611, and the plurality of partition plates 612 on the top wall and the plurality of partition plates 612 on the lower wall may be arranged in a staggered manner, so that the plurality of water chambers 613 are communicated with each other to guide the steam from the lower end of one water chamber 613 to the upper end of another water chamber, wherein the vertical flow guide design has the advantage of avoiding excessive contact between the hot steam and the cold water and reducing steam consumption. By using the characteristic that the higher the temperature of water is, the smaller the density is, the steam or hot water is always above the cold water, so as to limit the contact area between the steam and the cold water, reduce the steam consumption and reduce the water temperature rise. According to the invention, the upper part of the left water chamber 613 of the tank body 611 is provided with a pressurized steam inlet, and the pressurized steam inlet is connected to the steam-pressurizing pipelines 62. The lower part of the right water chamber 613 of the tank body 611 is provided with a drain outlet, and the drain outlet is connected to the drain pipeline 64. In some embodiments, each water chamber 613 may be provided with a exhaust pipeline 614 that may be used to vent steam from each water chamber 613. In some embodiments, the exhaust pipeline 614 may be provided with an exhaust valve 6141, which opens to allow the steam in the water chamber 613 to be exhausted from the exhaust pipeline 614. After the tank body 611 is emptied, the exhaust valve 6141 can be opened to discharge the high-pressure steam in the tank body 611 and relieve the pressure of the water tank.

Further, in some embodiments, the steam-pressurizing pipelines 62 may be arranged in one-to-one correspondence with the steam-pressurizing water tanks 61, and may be connected to the pressurized steam inlets at the upper portions of the water chambers 613 of the steam-pressurizing water tanks 61, so that the high pressure steam may enter from the upper portions of each water chamber 613 to pressurize the water downward, From the drain pipeline 64 to the passive containment cooling system 30, the secondary-side passive cooling system 40, the spraying system 70, and the reactor core assembly 20, and also to the next stage steam-pressurizing water tank 61 through the series pipeline 65. In some embodiments, asteam-pressurizing pipeline 62 may be provided with a bypass valve 621. When the bypass valve 621 is opened, the steam in the steam-pressurizing main pipeline 54 may be output to the steam-pressurizing pipeline 62 and input to the steam-pressurizing water tanks 61. In some embodiments, a steam-pressurizing pipeline 62 may also be connected to an external steam system. The external steam system can be the auxiliary steam system (SVA) and the main steam system of the adj acent unit. A steam-pressurizing pipeline 62 is fed from the steam generator 50 of the passive special safety system of the plant or from an external steam system. Wherein, when the steam generator 50 is used for air supply, the atmospheric discharge valve 521 may be opened to reduce the steam pressure to 15 bar.G, when the steam supply by the auxiliary steam of the SVA, the pressure is not reduced.

Further, in some embodiments, a water replenishing pipeline 63 may be arranged in one-to-one correspondence with a steam-pressurizing water tank 61. Of course, it is understood that, in other embodiments, a water replenishing pipeline 63 may not be limited to being arranged in one-to-one correspondence with a steam-pressurizing water tank 61. One end of a water replenishing pipeline 63 may be connected to a water inlet at a lower portion of a water chamber 613 at the left end of the tank 611, and the other end of a water replenishing pipeline 63 may be connected to an external water source. Specifically, in some embodiments, one end of a water replenishing pipeline 63 may be connected to the overhead water tank and/or the in-plant demineralized water tank, so that replenishing water may be supplied to the steam-pressurizing water tank 61 in time. In some embodiments, a water replenishing pipeline 63 may be provided with a water replenishing valve 631, when the water replenishing valve 631 is opened, and the water replenishing pipeline 63 may supply water to the steam-pressurizing water tank 61. Since the steam-pressurizing water tanks 61 are installed at the ground level, the water level of the demineralized water tank in the plant is higher, and the water tank is generally located on the hill in the plant area, and the position is higher. Therefore, after the pressure of a steam-pressurizing water tank 61 is completely released, the water replenishing valve 631 may be opened to replenish water by gravity. After the water is replenished, the water replenishing valve 631 is closed, and the steam-pressurizing water tank 61 can be put into operation again or placed in a standby state.

Further, in some embodiments, one end of a drain pipeline 64 may be connected to a water outlet at a lower portion of the water chamber at the right end of the pressurized steam water tank 61, and a drain pipeline 64 may be provided with a plurality of branch pipelines respectively connected to the passive containment cooling system 30, the secondary-side passive cooling system 40, the spraying system 70, and the reactor core assembly 20. In some embodiments, a drainage valve 641 may be provided on a drain pipelines 64, and the drainage valve 641 may be opened to drain the passive containment cooling system 30, the secondary-side passive cooling system 40, the spraying system 70, and the reactor core assembly 20. In some embodiments, a drainage valve 641 may be correspondingly disposed on a branch pipeline of the drain pipeline 64.

Further, in some embodiments, there may be a plurality of steam-pressurizing water tanks 61, and the plurality of steam-pressurizing water tanks 61 may be connected in sequence to form a multi-stage water tank group. Specifically, in some embodiments, the number of the steam-pressurizing water tanks 61 may be four. Of course, it is understood that in other embodiments, the number of the steam-pressurizing water tanks 61 is not limited to four, and may be one or more than four. Further, in some embodiments, the water supply system further includes one or more series pipelines 65. A series pipeline 65 may be disposed between two adjacent steam-pressurizing water tanks 61, and may be used to connect the two adjacent steam-pressurizing water tanks 61, so that the two adjacent steam-pressurizing water tanks 61 may be communicated. In some embodiments, a series pipeline 65 may be provided with a series valve 651, and a series valve 651 may be used to connect or isolate two adjacent steam-pressurizing water tanks 61. When all the series valves 651 are opened, the plurality of steam-pressurizing water tanks 61 may form a multi-stage water tank, and when all the series valves 651 are closed, each steam-pressurizing water tank 61 is an independent water tank. In some embodiments, a series pipelines 65 may also be connected to a drain pipeline 64, and in some embodiments, an outlet valve 652 may be provided at an end of a series pipelines 65 connected to a drain pipeline 64. The open of a outlet valve 652 places a series pipeline 65 in communication with a drain pipeline 64. Through a series valve 651 and a outlet valve 652, the steam-pressurizing water tanks can be operated in series, and the steam-pressurizing water tank can be cut/isolated and put into operation. According to the water storage condition of a steam-pressurizing water tank 61, the steam-pressurizing water tank 61 can be operated independently or in parallel by using the outlet valves 652 and the series valves 651 of the steam-pressurizing water tank 61, or the steam-pressurizing water tank 61 can be emptied or the steam-pressurizing water tank 61 can be cut/isolated in case of water shortage.

The passive special safety system of the nuclear power plant, according to an embodiment of the present invention, may inject the water in a steam-pressurizing water tank 61 into the passive containment cooling system 30, the secondary-side passive cooling system 40, the spraying system 70 and the reactor core assembly 20 in a passive manner by using the high-temperature and high-pressure steam generated by the external steam system and/or the steam generator. The operation of the passive special safety system of the nuclear power plant may include three steps, namely, separating and depressurizing the steam generators, pressurizing a steam-pressurizing water tank 61 to supply water to users, and refilling a steam-pressurizing water tank with water. The specific operation is as follows:
1. Separating and depressurizing the steam generators. Separating steam generators 50 means that main steam isolation is performed and the main steam isolation valves 541 of the three steam generators 50 are closed. And atmospheric vent valve 521 is open to reduce that steam pressure to 15 bar. G. When the steam is supplied by auxiliary steam of the SVA, pressure is not reduced;
2. The pressurized steam tank 61 is pressurized to supply water to the passive containment cooling system 30, the secondary-side passive cooling system 40, the spraying system 70, and the reactor core assembly 20. When the system is put into operation, the steam-pressurizing valve 621 of a steam-pressurizing water tank 61 is opened, and the steam-pressurizing water tank 61 is pressurized to the operating pressure. Then, the outlet valve 652 of the steam-pressurizing water tank 61 is opened, and the water stored in the steam-pressurizing water tank 61 is output from a drain pipeline 64 to supply water to the passive containment cooling system 30, the secondary-side passive cooling system 40, the spraying system 70 and the reactor core assembly 20;
3. The steam-pressurizing water tank 61 is refilled with water. When a steam-pressurizing water tank 61 is emptied, the inside is filled with high-pressure steam. The empty steam-pressurizing water tank 61 is separated from other steam-pressurizing water tanks 61, the exhaust pipeline 614 corresponding to each water chamber 613 is opened to release the pressure, and then the water replenishing valve 631 is opened to replenish water to the corresponding steam-pressurizing water tank 61.

According to the requirements of accident control strategy, the passive special safety system, according to an embodiment of the present invention, may have six operation modes, including "Safety Injection Mode", "Containment Spray Mode", "Containment Cooling Mode", "Secondary-side Water Resupplying Mode ", "Secondary-side Passive Cooling Mode" and "Reactor Pit Injection Mode", as follows:

### (1) Safety Injection Mode

When a primary circuit breaks, if the safety injection system is activated, the primary circuit water inventory is restored. If the safety injection system fails due to equipment or external disasters, the water supply system 60 of the present invention can be used to inject water into the reactor core assembly 20. After the water supply system 60 of the invention is put into operation, the water temperature at the outlet of the water tank is about 30 °C, the pressure is 15bar.G or 12bar.G, the pressure head is the same as that of the outlet of the low-pressure safety injection pump, and the outlet water temperature is close to that of the refueling water tank, so it can be used as a low-pressure safety injection train.

### 2) Containment Spray Mode

When a primary break, if the containment spraying system is activated, the containment pressure is reduced. If the containment spraying system fails due to equipment or external disasters, the water supply system 60 of the present invention can be used to spray water to the containment. After the water supply system 60 of the invention is put into operation, the water temperature at the outlet of the water tank is about 30 °C, the pressure is 15bar.G or 12bar.G, the pressure head is the same as the pressure head at the outlet of the containment spray pump, and the outlet water temperature is close to the water temperature of the refueling water tank, so it can be used as a row of containment spray.

### (3) Containment Cooling Mode

For the power plant installed with the passive cooling system of the containment, the high-level water tank of the containment can be cancelled in the design, and only a heat exchanger 42 and a water tank 41 soaking the heat exchanger 42 are reserved. When the passive cooling system of the containment needs to be put into operation, the water tank 41 soaking the heat exchanger 42 is filled with water through one or more steam-pressurizing water tanks 61 or the active water pump, so as to reduce the load of the containment.

### (4) Secondary-side Water Replenishing Mode

In the event of a total loss of feedwater accident, for a nuclear power plant without a secondary-side passive cooling system installed, the passive special system can be used as a means of mitigating the total loss of feedwater accident of the unit by using the steam-pressurizing water tank 61 to replace the main feedwater system (ARE) or the auxiliary feedwater system (ASG) to make up the SG before the "feed and bleed" is put into operation. Withdraw the primary circuit to the connection state of the residual heat removal system, so as to avoid the operation of the "feed and bleed".

### (5) Secondary-side Passive Cooling Mode

In the event of a total loss of feedwater accident, for a nuclear power plant equipped with a secondary-side passive cooling system, a heat exchanger 42 and a water tank 41 soaking the heat exchanger 42 can be retained, and the water tank 41 with a smaller volume can be replaced to maintain operation for several hours. When the secondary-side passive cooling system is put into operation, one or more steam-pressurizing water tanks 61 provide continuous replenishing water. Or directly replace the secondary-side passive cooling system.

### (6) Reactor Pit Injection Mode

When a severe accident occurs in the power plant (the reactor core outlet temperature reaches 650 °C), the reactor cavity water injection system (RPF) can fill the reactor cavity with water within half an hour at the stage of large flow (greater than 360m3/H) (the reactor cavity height is -3.5 m ~ 7.7 m, and the space volume is about 180m3). Then it will be transferred to the water supplement stage with small flow (about 40m3/H) to compensate the evaporation loss. This stage will last for about 24 hours. When the fire water distribution system (JPD) cannot supply water or cannot supply enough water, it is considered to add a temporary water injection interface on the system to take water from one or more steam-pressurizing water tanks 61 and inject it into the reactor cavity.

The nuclear power plant passive special safety system, according to an embodiment of the present invention, can be used to mitigate the consequences of a reactor accident in the event of:

### 1. Primary circuit breach accident

When the primary circuit break accident, the safety injection system and the spraying system will automatically start according to the parameters such as the temperature and pressure of the primary circuit and the pressure of the containment 10, the water inventory of the primary circuit will be restored, and the pressure of the containment 10 will also drop. For plants with the containment 10 passive cooling system installed, the containment 10 atmosphere is cooled by a high-level water tank on the containment 10, through the steel wall containment 10, or a heat exchanger, when the containment 10 pressure and temperature increase. If the equipment of the safety injection system fails or cannot operate due to external disasters, the primary water inventory cannot be restored, which will lead to the exposure of the core. If the equipment of containment 10 spray devices fails or cannot operate due to external disasters, the third barrier of the reactor has the risk of rupture, and the risk of radioactive leakage increases.

The passive special safety system is simple to operate, does not depend on external resources (such as a water source and a power supply), and can be quickly put into operation after an accident to relieve the consequences of the accident. Therefore, the commissioning of the passive special safety system should serve as an effective backup to the safety injection system and the spraying system 70 in the containment 10 following a "primary break".

For the power plant equipped with the passive cooling system of the containment 10, when the present invention is adopted, the high-level water tank of the containment 10 can be eliminated in design, and only a heat exchanger 41 and a water tank 42 soaking the heat exchanger 41 are reserved; when the passive cooling system of the containment needs to be put into operation, the water tank 42 soaking the heat exchanger 41 is filled with water through one or more steam-pressurizing water tanks 61 or the active water pump, And thus reduce that load on the containment 10.

### 2. Total Loss of feedwater accident

Following a "total loss of feedwater" accident, the existing accident management strategy will use the "feed and bleed" to maintain core cooling and fall back. The strategy is implemented in two steps: 1. Waitting; 2. Opening the pressurizer relief pipeline and starting the safety injection; 3. Putting the containment 10 spray into operation, and transfering the heat to the component cooling water system (RRI) through the containment spraying system (EAS) cooler, and then transfer the heat to the sea through the essential service water system (SEC). This strategy can effectively bring the unit to the state of connecting the residual heat removal system, but there is also a greater damage to the unit. After the implementation of "feed and bleed " operation, the unit may face the consequences of long-term shutdown for system equipment maintenance, or even direct retirement.

For a nuclear power plant without a secondary-side passive cooling system, the passive special system can be used as a mitigation means for a unit total loss of feedwater accident; before "feed and bleed" is put into operation, the passive special system is used for establishing the water supply of steam generator 50, and a loop is withdrawn to a residual heat removal system connection state, So as to avoid the input of the "feed and bleed". For the nuclear power plant installed with the secondary-side passive cooling system, the heat exchanger and the water tank soaking the heat exchanger can be reserved and soaked, and the volume of the water tank can be reduced to maintain operation for several hours. When the secondary-side passive cooling system is put into operation, the steam-pressurizing water tank can provide continuous replenishing water or directly replace the secondary-side passive cooling system.

The passive special safety system is simple to operate, does not depend on external resources (such as a water source and a power supply), and can be quickly put into operation after an accident to relieve the consequences of the accident. Therefore, for the nuclear power plant without the secondary-side passive cooling system, the commissioning of the passive special safety system should be the preferred response after the "total loss of feedwater accident". For the nuclear power plant installed with the secondary-side passive cooling system, a heat exchanger 42 and a water tank 41 soaking the heat exchanger 42 can be reserved and the a smaller water tank can be replaced to maintain operation for several hours. When the secondary-side passive cooling system is put into operation, one or more steam-pressurizing water tanks 61 provide continuous replenishing water.

### 3. Serious accident

In that event of a severe accident in the power plant, when the molten core falls into the low head of the reactor pressure vessel (RPV) 21, water is injected into the reactor cavity to cool the outside of the reactor pressure vessel 21, and the reactor cavity and other safety functions (such as primary loop pressure relief, etc.) act simultaneously to maintain the integrity of the RPV, so that the molten core fragment are retained in the pressure vessel 21, prevents most ex-core phenomena (direct heating of the containment 10, steam explosions, melt-concrete reactions, etc.) That could threaten the integrity of the containment 10.

For the nuclear power plant equipped with the reactor cavity water injection system (RPF), the reactor cavity can be filled with water within half an hour in the large flow phase of the RPF, and then the reactor cavity can be filled with water in the small flow phase to compensate the evaporation loss. This phase lasts for about 24 hours. When the fire water distribution system (JPD) cannot supply water or cannot supply enough water, a temporary water injection interface can be added to the system. Water is taken from the steam-pressurizing water tank 61 of the present invention and injected into the reactor cavity.

As shown in fig. 1, a primary circuit break accident occurs in a passive special safety system in which four steam-pressurizing water tanks 60 are installed in a generation III unit in which a containment high level water tank 41 is installed.

### Water source

Cooling the core requires sufficient water as the cooling medium. Sufficient water supply is required for the cooling and depressurization of containment 10 as a source of spray water. In this case, the demineralized water in the plant is used as the cooling water source.

### Water injection power

After the accident, the main steam generated by a steam generator 50 still has the energy of high temperature and high pressure, which can be used as the water injection power after being decompressed by a atmospheric discharge valve 521 to drive the low-pressure water in a steam-pressurizing water tank 61 to be injected into the system requiring cooling water.

### Water injection condition and water injection channel

When a steam generator 50 is isolated, it is necessary to open the water injection passage as soon as possible, and open a discharge valve 641 directly connected to a steam-pressurizing water tank 61 of the relevant system.

### 4. System commissioning

The system is put into operation according to the three steps in the technical scheme.

Step 1: separating and depressurizing the steam generator. Perform main steam isolation and close the main steam isolation valves of the three steam generators 50. The steam pressure is reduced to 15bar.G through the pressure reducing valve. When supplying steam through the auxiliary steam of the SVA, pressure is not reduced.

Step 2: The steam-pressurizing water tank 61 pressurizes water to the reactor core assembly 20, the passive containment cooling system 30, the secondary-side passive cooling system 40, the steam generator 50, and/or the spraying system 70. When the water supply system is put into operation, the steam-pressurizing valve 621 of a first steam-pressurizing water tank 61 is opened, and the steam-pressurizing water tank 61 is pressurized to an operating pressure. The outlet valve 652 of a last steam-pressurizing water tank 61 is opened, and water stored in the steam-pressurizing water tank 61 is output from a drain pipeline 64 to supply water to the reactor core assembly 20, the passive containment cooling system 30, the secondary-side passive cooling system 40, the steam generator 50, and/or the spraying system 70.

Step 3: The steam-pressurizing water tank 61 is refilled with water. After a steam-pressurizing water tank 61 is emptied, the inside is filled with high-pressure steam. Isolate it from other steam-pressurizing water tanks 61, and open the exhaust pipelines 614 corresponding to each water chamber 613 for pressure relief. As the steam-pressurizing water tank is installed at the ground level, the water level of the demineralized water tank in the plant is relatively high. Generally, there is a water tank on the hill in the plant area, and the position is higher. Therefore, after the pressure of the steam-pressurizing water tank 61 is completely released, a water replenishing valve 631 may be opened to replenish water by gravity. After the water is replenished, the water replenishing valve is closed, and the water can be put into the steam-pressurizing water tank 61 again or placed in a standby state.

### 5. Treatment of primary circuit breach accident

The system is put into operation according to the three steps in the technical scheme.

Step 1: separating and depressurizing the steam generator. Perform main steam isolation and close the main steam isolation valves of the three steam generators 50. The steam pressure is reduced to 15bar.G through a pressure reducing valve. When supplying steam through the auxiliary steam of the SVA, pressure is not reduced.

Step 2: The steam-pressurizing water tank 61 pressurizes water to the reactor core assembly 20, the passive containment cooling system 30, the secondary-side passive cooling system 40, the steam generator 50, and/or the spraying system 70. When the water supply system is put into operation, the steam-pressurizing valve 621 of a first steam-pressurizing water tank 61 is opened, and the steam-pressurizing water tank 61 is pressurized to an operating pressure. The outlet valve 652 of a last steam-pressurizing water tank 61 is opened, and water stored in the steam-pressurizing water tank 61 is output from the drain pipelines 64 to supply water to the reactor core assembly 20, the passive containment cooling system 30, the secondary-side passive cooling system 40, the steam generator 50, and/or the spraying system 70.

Step 3: The steam-pressurizing water tank 61 is refilled with water. When a steam-pressurizing water tank 61 is emptied, the inside is filled with high-pressure steam. Isolate it from other steam-pressurizing water tanks 61, and open the exhaust pipeline 614 corresponding to each water chamber 613 for pressure relief. As the steam-pressurizing water tank is installed at the ground level, the water level of the demineralized water tank in the plant is relatively high. Generally, there is a water tank on the hill in the plant area, and the position is higher. Therefore, when the pressure of a steam-pressurizing water tank 61 is completely released, a water replenishing valve 631 may be opened to replenish water by gravity. After the water is replenished, the water replenishing valve is closed, and the water can be put into the steam-pressurizing water tank 61 again or placed in a standby state.

The beneficial effects of the passive special safety system of the nuclear power plant are as follows:
1, a super-large water tank does not need to be installed on that upper part of the containment 10, so that the load of the containment 10 is reduced, and the safety of the containment is improved;
2. It can be used as a backup means for all low-pressure injection and containment spray special safety systems to improve the safety of nuclear power plants;
3. Optimize the accident handling strategy of "total loss of feedwater" to avoid the serious consequences of long-term overhaul or even retirement of the unit caused by the unit entering the " feed and bleed ".
4. As a backup water source for reactor cavity water injection, it can prevent most of the off-reactor phenomena that may threaten the integrity of the containment and increase the cooling time of the reactor cavity.
5. For the containment of the third-generation reactor, the penetrations of the containment 10 can be reduced to reduce the possible ways of radioactive release in the event of an accident and reduce the potential risk of radioactive release to the public; the size of the pool can also be reduced, and one or more steam-pressurizing water tanks 61 are filled with water when it is put into operation;
6. When being put into operation, it has the characteristics of long-term passive operation. A steam-pressurizing water tank 61 can be operated passively for a long time without using external energy when it is refilled with water and put into operation again. Other high-level water tanks cannot realize passive water refilling due to too high installation elevation;
7. Compared with the high-level water tank of the containment, the water tank group can be assembled on site when the modular construction is completed in the factory, which does not occupy the critical path of construction and reduces the construction time of the containment;
8. The operation mode of the water tank group is flexible. Two units are equipped with a set of steam-pressurizing water tank 61. During operation, according to the specific conditions of the accident, water can be supplied to one unit or to two units, so as to realize the common use of two units and further reduce the cost of the nuclear power plant.

The above embodiments are only for illustrating the technical concepts and feature of the present invention, and are intended to enable those skilled in the art to understand and implement the present invention, but not to limit the scope of protection of the present invention. The invention is defined in the appended claims.

## Claims

1. A water supply system (60) for a passive special safety system of a nuclear power plant, which is connected to a passive containment cooling system (30), a secondary-side passive cooling system (40), a spraying system (70) and/or a reactor core assembly (20) of the passive special safety system of the nuclear power plant, wherein :
said water supply system comprises at least one steam-pressurizing water tank (61), at least one steam-pressurizing pipeline (62), at least one water replenishing pipeline (63) and a drain pipeline (64);
each steam-pressurizing water tank (61), in use, is connected to the steam generated by the steam generator (50) and is pressurized by the steam to drive the water in the steam-pressurizing water tank (61) to be delivered out;
each steam-pressurizing pipeline (62) is connected with a steam-pressurizing water tank (61) and, in use, is connected to
a steam generator (50) in the passive special safety system of the nuclear power plant and/or an external steam system;
each water replenishing pipeline (63) is connected with a steam-pressurizing water tank (61) and, in use, is connected to an external water source;
the drain pipeline (64) is connected to the steam-pressurizing water tanks (61) and, in use, is connected to to the passive containment cooling system (30), the secondary-side passive cooling system (40), the spraying system (70), and/or the reactor core assembly (20),
wherein each steam-pressurizing water tank (61) comprises a tank body (611), a plurality of partition plates (612) and a plurality of water chambers (613);
**characterized in that**
the tank body (611) is a horizontal tank;
the plurality of the partition plates (612) are provided in the tank body (611) and are arranged at intervals along the length direction of the tank body (611), partitioning a space in the tank body (611) into a plurality of water chambers (613);
the plurality of water chambers (613) comprises a left water chamber (613) and a right water chamber (613) arranged along the length direction of the tank body (611);
the upper part of the left water chamber (613) of the tank body (611) is provided with a pressurized steam inlet, connected to a steam-pressurizing pipeline (62); and
the lower part of the right water chamber (613) of the tank body (611) is provided with a drain outlet, connected to the drain pipeline (64).

2. The water supply system for a passive special safety system of a nuclear power plant according to claim 1, wherein the tank body (611) comprises a bottom wall and a top wall disposed opposite to the bottom wall;
the bottom wall is provided with a plurality of partition plates (612) extending towards the top wall;
the top wall is provided with a plurality of partition plates (612) extending towards the bottom wall;
the plurality of partition plates (612) on the top wall and the plurality of partition plates (612) on the bottom wall are arranged in a staggered manner so that the plurality of water chambers (613) are communicated with each other.

3. The water supply system for passive special safety systems of a nuclear power plant according to claim 1, wherein an exhaust pipeline (614) is provided on each of the water chambers (613), and a vent valve (6141) is provided on each of the exhaust pipelines (614).

4. The water supply system for passive special safety system of a nuclear power plant according to claim 1, wherein the number of the steam-pressurizing water tanks (61) is multiple, and the multiple steam-pressurizing water tanks (61) are connected in sequence;
the water supply system further comprises a series pipeline (65) arranged between every two adjacent steam-pressurizing water tanks (61) so as to connect the two adjacent steam-pressurizing water tanks (61), wherein each series pipeline (65) is provided with a series valve (651) for communicating or isolating the two adjacent steam-pressurizing water tanks (61);
all the series pipelines (65) are connected with the drain pipeline (64), and an outlet valve (652) is arranged at one end of each series pipeline (65) connected with the drain pipeline (64).

5. The water supply system for passive special safety systems of a nuclear power plant according to claim 4, wherein the number of the water replenishing pipelines (63) is multiple, and the multiple water replenishing pipelines (63) are connected to the multiple steam-pressurizing water tanks (61) in a one-to-one correspondence manner.

6. The water supply system for the passive special safety system of a nuclear power plant according to claim 1, wherein a steam-pressurizing valve (621) is provided on each steam-pressurizing pipeline (62).

7. The water supply system for the passive special safety system of a nuclear power plant according to claim 1, wherein each water replenishing pipeline (63) is provided with a water replenishing valve (631).

8. A passive special safety system for a nuclear power plant, comprising: a passive containment cooling system (30), a secondary-side passive cooling system (40), a reactor core assembly (20), a steam generator (50), a spraying system (70), and a water supply system (60) for a passive special safety system of a nuclear power according to any one of claim 1 to claim 7;
the passive containment cooling system (30) is disposed opposite the reactor core assembly (20);
the reactor core assembly (20) is connected to the steam generator (50);
the secondary-side passive cooling system (40) is connected with the steam generator (50) and/or the passive containment cooling system (30).

## Patentansprüche

1. Wasserversorgungssystem (60) für ein passives Sicherheitssystem mit besonderer Sicherheit eines Kernkraftwerks, das mit einem passiven Containment-Kühlsystem (30), einem sekundärseitigen passiven Kühlsystem (40), einem Sprühsystem (70) und/oder einer Reaktorkernbaugruppe (20) des passiven Sicherheitssystems mit besonderer Sicherheit des Kernkraftwerks verbunden ist, wobei:
das Wasserversorgungssystem mindestens einen Dampfdruckwassertank (61), mindestens eine Dampfdruckrohrleitung (62), mindestens eine Wasser-Nachfüllleitung (63) und eine Ablaufleitung (64) umfasst;
jeder Dampfdruckwassertank (61), im Betrieb, mit dem vom Dampferzeuger (50) erzeugten Dampf verbunden ist und vom Dampf unter Druck gesetzt wird, um das Wasser im auszubringenden Dampfdruckwassertank (61) anzutreiben;
jede Dampfdruckrohrleitung (62) mit einem Dampfdruckwassertank (61) verbunden ist und, im Betrieb, mit einem Dampferzeuger (50) im passiven Sicherheitssystem mit besonderer Sicherheit des Kernkraftwerks und/oder einem externen Dampfsystem verbunden ist;
jede Wasser-Nachfüllleitung (63) mit einem Dampfdruckwassertank (61) verbunden ist und, im Betrieb, mit einer externen Wasserquelle verbunden ist;
die Ablaufleitung (64) mit den Dampfdruckwassertanks (61) verbunden ist und, im Betrieb, mit dem passiven Containment-Kühlsystem (30), dem sekundärseitigen passiven Kühlsystem (40), dem Sprühsystem (70) und/oder der Reaktorkernbaugruppe (20) verbunden ist,
wobei jeder Dampfdruckwassertank (61) einen Tankkörper (611), eine Vielzahl von Trennplatten (612) und eine Vielzahl von Wasserkammern (613) umfasst;
**dadurch gekennzeichnet, dass**
der Tankkörper (611) ein horizontaler Tank ist;
die Vielzahl von Trennplatten (612) im Tankkörper (611) bereitgestellt wird und in Abständen entlang der Längsrichtung des Tankkörpers (611) angeordnet sind, wobei ein Raum im Tankkörper (611) in eine Vielzahl von Wasserkammern (613) unterteilt ist;
die Vielzahl von Wasserkammern (613) eine linke Wasserkammer (613) und eine rechte Wasserkammer (613) umfasst, die entlang der Längsrichtung des Tankkörpers (611) angeordnet sind;
der obere Teil der linken Wasserkammer (613) des Tankkörpers (611) mit einem unter Druck stehenden Dampfeinlass bereitgestellt wird, der mit einer Dampfdruckrohrleitung (62) verbunden ist; und
der untere Teil der rechten Wasserkammer (613) des Tankkörpers (611) mit einem Ablaufauslass bereitgestellt ist, der mit der Ablaufleitung (64) verbunden ist.

2. Wasserversorgungssystem für ein passives Sicherheitssystem mit besonderer Sicherheit eines Kernkraftwerks nach Anspruch 1, wobei der Tankkörper (611) eine untere Wand und eine der Bodenwand gegenüberliegende obere Wand umfasst;
die untere Wand mit einer Vielzahl von Trennplatten (612) bereitgestellt ist, die sich in Richtung der oberen Wand erstrecken;
die obere Wand mit einer Vielzahl von Trennplatten (612) bereitgestellt ist, die sich in Richtung der unteren Wand erstrecken;
die Vielzahl von Trennplatten (612) an der oberen Wand und die Vielzahl von Trennplatten (612) an der unteren Wand derart versetzt angeordnet sind, dass die Vielzahl von Wasserkammern (613) miteinander in Verbindung stehen.

3. Wasserversorgungssystem für passive Sicherheitssysteme mit besonderer Sicherheit eines Kernkraftwerks nach Anspruch 1, wobei eine Abgasleitung (614) an jeder der Wasserkammern (613) bereitgestellt ist und ein Entlüftungsventil (6141) an jeder der Abgasleitungen (614) bereitgestellt ist.

4. Wasserversorgungssystem für ein passives Sicherheitssystem mit besonderer Sicherheit eines Kernkraftwerks nach Anspruch 1, wobei die Anzahl der Dampfdruckwassertanks (61) ein Vielfaches ist und die mehreren Dampfdruckwassertanks (61) in Reihe miteinander verbunden sind;
das Wasserversorgungssystem ferner eine Reihenleitung (65) umfasst, die zwischen jeweils zwei benachbarten Dampfdruckwassertanks (61) angeordnet ist, um die zwei benachbarten Dampfdruckwassertanks (61) zu verbinden, wobei jede Reihenleitung (65) mit einem Reihenventil (651) zur Verbindung oder Trennung der zwei benachbarten Dampfdruckwassertanks (61) bereitgestellt ist;
alle Reihenleitungen (65) mit der Ablaufleitung (64) verbunden sind, und an einem Ende jeder Reihenleitung (65), die mit der Ablaufleitung (64) verbunden ist, ein Auslassventil (652) angeordnet ist.

5. Wasserversorgungssystem für passive Sicherheitssysteme mit besonderer Sicherheit eines Kernkraftwerks nach Anspruch 4, wobei die Anzahl der Wasser-Nachfüllleitungen (63) ein Vielfaches ist und die mehreren Wasser-Nachfüllleitungen (63) mit den mehreren Dampfdruckwassertanks (61) in einer Eins-zu-Eins-Korrespondenz verbunden sind.

6. Wasserversorgungssystem für das passive Sicherheitssystem mit besonderer Sicherheit eines Kernkraftwerks nach Anspruch 1, wobei an jeder Dampfdruckrohrleitung (62) ein Dampfdruckventil (621) bereitgestellt ist.

7. Wasserversorgungssystem für das passive Sicherheitssystem mit besonderer Sicherheit eines Kernkraftwerks nach Anspruch 1, wobei jede Wasser-Nachfüllleitung (63) mit einem Wassernachfüllventil (631) bereitgestellt ist.

8. Passives Sicherheitssystem mit besonderer Sicherheit für ein Kernkraftwerk, umfassend: ein passives Containment-Kühlsystem (30), ein sekundärseitiges passives Kühlsystem (40), eine Reaktorkernbaugruppe (20), einen Dampferzeuger (50), ein Sprühsystem (70) und ein Wasserversorgungssystem (60) für ein passives Sicherheitssystem mit besonderer Sicherheit eines Kernkraftwerks nach einem der Ansprüche 1 bis 7;
das passive Containment-Kühlsystem (30) gegenüber der Reaktorkernbaugruppe (20) angeordnet ist;
die Reaktorkernbaugruppe (20) mit dem Dampferzeuger (50) verbunden ist;
das sekundärseitige passive Kühlsystem (40) mit dem Dampferzeuger (50) und/oder dem passiven Containment-Kühlsystem (30) verbunden ist.

## Revendications

1. Système d'alimentation en eau (60) pour un système de sécurité spécial passif d'une centrale nucléaire, qui est connecté à un système de refroidissement de confinement passif (30), à un système de refroidissement passif côté secondaire (40), à un système de pulvérisation (70) et/ou à un ensemble cœur de réacteur (20) du système de sécurité spécial passif de la centrale nucléaire, dans lequel :
ledit système d'alimentation en eau comprend au moins un réservoir d'eau sous pression de vapeur (61), au moins une conduite de pressurisation de vapeur (62), au moins une conduite de réapprovisionnement en eau (63) et une conduite de vidange (64) ;
chaque réservoir d'eau sous pression de vapeur (61), en cours d'utilisation, est connecté à la vapeur générée par le générateur de vapeur (50) et est pressurisé par la vapeur pour expulser l'eau contenue dans le réservoir d'eau sous pression de vapeur (61) ;
chaque conduite de pressurisation de vapeur (62) est connectée à un réservoir d'eau sous pression de vapeur (61) et, en cours d'utilisation, est connectée à un générateur de vapeur (50) dans le système de sécurité spécial passif de la centrale nucléaire et/ou à un système de vapeur externe ;
chaque conduite de réapprovisionnement en eau (63) est connectée à un réservoir d'eau sous pression de vapeur (61) et, en cours d'utilisation, est connectée à une source d'eau externe ;
la conduite de vidange (64) est connectée aux réservoirs d'eau de pressurisation de vapeur (61) et, en cours d'utilisation, est connectée au système de refroidissement de confinement passif (30), au système de refroidissement passif côté secondaire (40), au système de pulvérisation (70) et/ou à l'ensemble cœur de réacteur (20),
dans lequel chaque réservoir d'eau sous pression de vapeur (61) comprend un corps de réservoir (611), une pluralité de plaques de séparation (612) et une pluralité de chambres à eau (613) ;
**caractérisé en ce que**
le corps de réservoir (611) est un réservoir horizontal ;
la pluralité de plaques de séparation (612) sont prévues dans le corps de réservoir (611) et sont agencées à intervalles le long de la direction de la longueur du corps de réservoir (611), séparant un espace dans le corps de réservoir (611) en une pluralité de chambres à eau (613) ;
la pluralité de chambres à eau (613) comprend une chambre à eau gauche (613) et une chambre à eau droite (613) agencées dans la direction de la longueur du corps de réservoir (611) ;
la partie supérieure de la chambre à eau gauche (613) du corps de réservoir (611) est dotée d'une entrée de vapeur sous pression, connectée à une conduite de pressurisation de vapeur (62) ; et
la partie inférieure de la chambre à eau droite (613) du corps de réservoir (611) est dotée d'une sortie de drainage, connectée à la conduite de vidange (64).

2. Système d'alimentation en eau pour un système de sécurité spécial passif d'une centrale nucléaire selon la revendication 1, dans lequel le corps de réservoir (611) comprend une paroi inférieure et une paroi supérieure disposée à l'opposé de la paroi inférieure ;
la paroi inférieure est dotée d'une pluralité de plaques de séparation (612) se prolongeant vers la paroi supérieure ;
la paroi supérieure est dotée d'une pluralité de plaques de séparation (612) se prolongeant vers la paroi inférieure ;
la pluralité de plaques de séparation (612) sur la paroi supérieure et la pluralité de plaques de séparation (612) sur la paroi inférieure sont agencées de manière décalée de sorte que la pluralité de chambres à eau (613) communiquent entre elles.

3. Système d'alimentation en eau pour systèmes de sécurité spéciaux passifs d'une centrale nucléaire selon la revendication 1, dans lequel une conduite d'échappement (614) est prévue sur chacune des chambres à eau (613), et une vanne d'aération (6141) est prévue sur chacune des conduites d'échappement (614).

4. Système d'alimentation en eau pour système de sécurité spécial passif d'une centrale nucléaire selon la revendication 1, dans lequel le nombre de réservoirs d'eau de pressurisation de vapeur (61) est multiple, et les multiples réservoirs d'eau de pressurisation de vapeur (61) sont connectés en séquence ;
le système d'alimentation en eau comprend également une conduite en série (65) agencée entre deux réservoirs d'eau de pressurisation de vapeur adjacents (61) de manière à connecter les deux réservoirs d'eau de pressurisation de vapeur adjacents (61), dans lequel chaque conduite en série (65) est dotée d'une vanne en série (651) pour faire communiquer ou isoler les deux réservoirs d'eau de pressurisation de vapeur adjacents (61) ;
toutes les conduites en série (65) sont connectées à la conduite de vidange (64), et une vanne de sortie (652) est agencée au niveau d'une extrémité de chaque conduite en série (65) connectée à la conduite de vidange (64).

5. Système d'alimentation en eau pour systèmes de sécurité spéciaux passifs d'une centrale nucléaire selon la revendication 4, dans lequel le nombre de conduites de réapprovisionnement en eau (63) est multiple, et les multiples conduites de réapprovisionnement en eau (63) sont connectées aux multiples réservoirs d'eau de pressurisation de vapeur (61) de manière à correspondre de manière biunivoque.

6. Système d'alimentation en eau pour le système de sécurité spécial passif d'une centrale nucléaire selon la revendication 1, dans lequel une vanne de pressurisation de vapeur (621) est prévue sur chaque conduite de pressurisation de vapeur (62).

7. Système d'alimentation en eau pour le système de sécurité spécial passif d'une centrale nucléaire selon la revendication 1, dans lequel chaque conduite de réapprovisionnement en eau (63) est dotée d'une vanne de réapprovisionnement en eau (631).

8. Système de sécurité spécial passif pour une centrale nucléaire, comprenant : un système de refroidissement de confinement passif (30), un système de refroidissement passif côté secondaire (40), un ensemble cœur de réacteur (20), un générateur de vapeur (50), un système de pulvérisation (70) et un système d'alimentation en eau (60) pour un système de sécurité spécial passif d'une centrale nucléaire selon l'une quelconque des revendications 1 à 7 ;
le système de refroidissement de confinement passif (30) est disposé à l'opposé de l'ensemble cœur de réacteur (20) ;
l'ensemble cœur de réacteur (20) est connecté au générateur de vapeur (50) ;
le système de refroidissement passif côté secondaire (40) est connecté au générateur de vapeur (50) et/ou au système de refroidissement de confinement passif (30).
